# EUROPEAN PATENT SPECIFICATION

(11) **EP 3 507 427 B1**
(45) Date of publication and mention of the grant of the patent: **11.08.2021**
(21) Application number: 17780142.0
(22) Date of filing: 04.09.2017
(51) Int. Cl.: E03F 5/04, E03C 1/298

(54) **SHOWER DRAIN FITTING**
DUSCHABLAUFGARNITUR
ACCESSOIRE DE VIDANGE DE DOUCHE

(30) Priority: 05.09.2016 GB 201615011
(43) Date of publication of application: 10.07.2019
(73) Proprietor: McAlpine & Co Ltd., Glasgow, Strathclyde G52 4LF (GB)
(72) Inventor: MCALPINE, James Edward, Paisley, Renfrewshire PA2 9LA (GB)
(74) Representative: Creation IP Ltd
(86) International application number: PCT/GB2017/052567
(87) International publication number: WO 2018/042202

(56) References cited:
- WO-A1-00/14345
- CN-A- 104 912 178
- CN-U- 202 081 476
- CN-U- 202 164 679

## Description

### FIELD OF THE INVENTION

The present invention relates to a shower drain fitting, according to the preamble of claim 1. In particular, the present invention relates to a shower drain fitting comprising a mechanical seal to replace a water seal, which is conventionally provided in a trap, which extends down from a drainage outlet of a shower tray.

### BACKGROUND TO THE INVENTION

Sanitary ware, for example a bath, a shower, a sink etc. include a waste trap connected to a drain outlet defined by a hole through the sanitary ware component such that waste water can be expelled.

Turning to the example of a shower, a shower tray is typically located close to the ground such that a person can easily step onto the shower tray. As such, a waste trap extending down from the drain outlet of a shower is relatively shallow compared with a waste trap used with other sanitary ware products.

A waste trap, typically, includes a body which is located under the outlet of the shower tray and its purpose, typically, is to provide a water seal. A water seal prevents unpleasant gases and odours from backing up the waste pipe and entering the shower enclosure.

It is common for a shallow water trap to become blocked or clogged due to a build-up residue from hair and body cleaning products, for example from shampoo and conditioner, shower gels and also hair being washed into the trap. Typically, in a shower application, a water seal is provided by an annular gap between an outlet pipe and the body of the water trap. The effective outlet is the annular gap, which it will be appreciated is very small and is prone to blocking.

In the event of a shower based water trap becoming blocked it is common to use unblocking fluids or gels or a plunger to move the blockage because access to the inside of the trap is typically obtained from beneath the shower tray or basin. It will be appreciated due to the shallow depth of the water trap it is difficult, often impossible, to disassemble the trap to access the inside of the trap for cleaning or maintenance.

Chinese utility model documents CN 202 081 476 U and CN 202 164 679 U, PCT application WO 00/14345 and Chinese patent application CN 104 912 178 each describe anti-odour drain components.

CN 202 081 476 U relates to an anti-odour draining valve and a corresponding floor drain, which aims to solve the problem that conventional water seals cannot effectively seal the sewer after the water has dried-out resulting in indoor air frequently smelling unbearably odorous.

CN 202 164 679 U relates to a floor drain with a simple structure, easy to use, easy to disassemble and install, and capable of preventing insects and odours entering the room in which the floor drain is installed.

WO 00/14345 relates to an apparatus for preventing reverse flow in a drainage system and includes an openable/closable member installed on a guide member causing an air-tight sealing part to be opened and closed by being oppositely interlocked to an openable/closable device actuating member.

CN 104 912 178 relates to a deodorising floor drain comprising an outer cylinder, an inner cylinder and a panel, wherein the inner cylinder is provided with a water inlet and a water outlet, the panel is located above the inner cylinder, and a seal plate is arranged inside the inner cylinder.

### SUMMARY OF THE INVENTION

According to the present invention, there is provided a shower drain fitting for insertion into a drain outlet of a shower tray, the shower drain fitting comprises:
an elongate hollow body and a closure member, wherein the closure member comprises an internal face and an external face
the closure member being movable between a seated position and an open position, wherein in the seated position the closure member engages with an outlet end of the body such that back-flow through the body is prevented and wherein in the open position contact between the closure member and the outlet end of the body is broken to provide a one-way through-flow path through the body; wherein the closure member is biased to the seated position and is movable between the seated position and the open position in response to fluid flowing through the body from the drain outlet side of the body and is movable substantially automatically from an open position to a seated position in the absence of fluid flow from the drain outlet side of the body and in response to pressure on the external face of the closure member opposite the drain outlet side; and
wherein the internal face of the closure member comprises a centre, an edge and a sloping surface, which defines a downward slope from the centre to the edge of the internal face wherein the incline of the sloping surface is between 3 and 15 degrees.

A shower drain fitting according to the invention provides a mechanical seal device that allows through-flow during normal operation of the shower and provides a barrier to odour and rodent ingress when the shower is not in use.

As discussed above, a shower trap is typically shallow and therefore is prone to blocking due to a build-up of residue of body and hair cleaning products and with hair and is difficult to clean without aggressive cleaning products. A shower drain fitting according to the first aspect provides a device that can be cleaned more easily than a water seal arrangement because the arrangement of the body and the closure member allows cleaning and clearing of blockages simply by flushing water through the body to move the closure member from its seated configuration. The displacement of the closure member and the sloping surface of the external face allows residue from cleansing products or hair to be flushed from the body and to run-off the internal surface of the closure member to a waste pipe connected to an external drain. In normal orientation of the fitting the internal face provides an upper surface of the closure member. The shower drain fitting according to the present invention, therefore simplifies cleaning and eliminates the need to access the trap from below the shower tray.

In a seated position, the closure member cooperates with an external face of the body outlet.

A sloping surface promotes run-off, for example, whilst showering the water from the shower head will act to flush any build-up of residue or hair through the body and off the internal face of the closure member.

Various embodiments of the invention are defined by the dependent claims.

The shower drain fitting may comprise a resilient member operable to bias the closure member to a seated position. The resilient member may be a coiled spring receivable in the sleeve and over the stem.

Whilst inserting the coiled spring into the sleeve over the stem it is compressed such that the closure member is pulled against the outlet end of the body and is therefore biased to a seated position. The closure member can be displaced to the open position by pressure or water flow acting on the internal surface of the closure member from within the body. This action overcomes the spring force and causes the spring to extend, thus moving the closure member to the open position.

The shower drain fitting provides a one-way seal; wherein compressing a tension spring holds the closure member in a seated position until water flows from the direction of the outlet of the shower tray, at which time the closure member will move to the open position. Accordingly, when there is no flow through the body, for example from the shower, the spring holds the closure member in the seated position and any pressure or load acting on the external face of the closure member will act with the spring force and will push the closure member towards the body and therefore ensures that the closure member remains in the seated position thereby providing a barrier to the ingress of odours and rodents.

### BRIEF DESCRIPTION OF THE DRAWINGS

Embodiments of the present invention are described below, by way of example only, with reference to the accompanying drawings, in which:
Figure 1 is a schematic representation of a drain fitting comprising a mechanical seal according to an embodiment of the present invention;
Figure 2 is a schematic representation of an exploded view of a closure member providing sealing capacity of the mechanical seal as illustrated in figure 1.

### DESCRIPTION

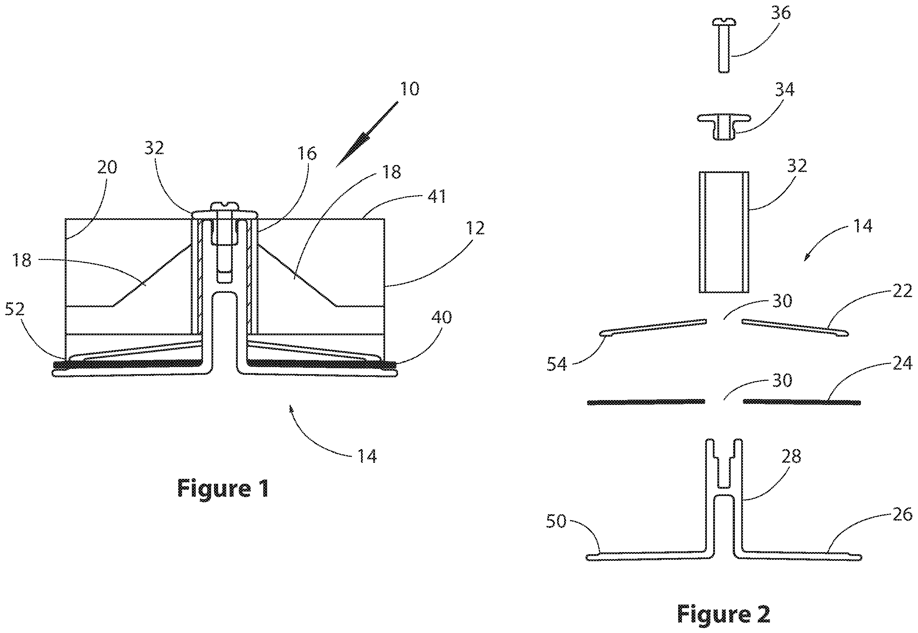

Figure 1 illustrates a sectional view of a shower drain fitting 10 according to an embodiment of the present invention. The shower drain fitting 10 is considered particularly beneficial for use with shower traps, which are prone to blocking and which are difficult to access for cleaning.

The shower drain fitting 10 includes an annular body 12 and a seal assembly 14 which is resiliently attached to the body 12.

The seal assembly 14 is illustrated in an exploded arrangement in figure 2, such that the components making up the seal assembly 14 are easily identified.

In the illustrated example, the body 12 includes a centre tube or sleeve 16 and three ribs 18 (only two ribs are visible in figure 1) extending from the centre tube 16 to the inside wall 20 of the body 12. The ribs 18 act to centre the tube 16 relative to the body 12 and reinforce the body 12.

As illustrated in figure 2, the seal assembly 14 includes an upper disc 22, a flexible sealing disc 24, and a lower disc 26. The sealing disc 24 is sandwiched between the upper disc 22 and the lower disc 26.

The lower disc 26 is attached or, as illustrated, may be integrally formed with a stem 28. The stem 28 facilitates insertion of the seal assembly 14 into the body 12 and facilitates linear/axial movement of the seal assembly 14 between a seated position and an open position, as described further below.

The upper disc 22 and the sealing disc 24 each include a centre hole 30 such that both discs 22, 24 can be inserted onto the stem 28. This arrangement facilitates easy cleaning and maintenance of the seal assembly 14.

A spring 32 is also received over the stem 28. The spring 32 compresses the upper disc 22 against the sealing disc 24 and the sealing disc 24 against the lower disc 26.

The spring 32 also controls movement of the seal assembly 14, between a seated position and an open position as discussed further below.

In the illustrated embodiment, a cap 34 and screw 36 secure the seal assembly 14 to the body 12.

The assembly of the shower drain fitting 10 according to an embodiment of the present invention is illustrated with reference to figures 1 and 2. The sealing disc 24 is inserted onto the stem 28 followed by the upper disc 22 such that the sealing disc 24 is sandwiched between the upper disc 22 and the lower disc 26. The sealing disc 24 is compressed between the upper disc 22 and the lower disc 26 when assembled with the body 12 and the spring 32.

The stem 28 is inserted, into the centre tube 16 from the outlet end 40 of the body, i.e. it is inserted from below, in normal orientation. The next step is the spring 32 is inserted, from the inlet end 41 of the body into the tube 16 and onto the stem 28. The cap 34 is then placed on top of the spring 32 and is secured to the top of the stem 28 with the screw 36 such that the spring 32 is contained within an annular gap defined between the stem 28 and the tube 16. The action of securing the cap 34 compresses the spring 32 to bias the seal assembly 14 against the outlet end 40 of the body 12.

In the illustrated example three discs 22, 24, 26 provide the closing element of the closure member 10. The uppermost disc 22 comprises a tapered upper surface.

The tapered surface facilitates easy run off of water, residue of hair and body wash products and hair from the surface.

In the illustrated example the taper direction is downwards from the centre of the disc 22 to the edge of the disc 22. In the illustrated example, the taper angle is in the region of 7 to 11 degrees.

In the illustrated embodiment, the lower disc 26 and the sealing disc 24 are dimensioned such that, in the seated position, the upper face or internal face of the sealing disc 24 is pressed against the outlet end 40 of the body 12 and the external face of the sealing disc 24 is pressed against the internal face of the lower disc 26 by the biasing action of the spring 32 on the seal assembly 26.

The upper disc 22 may be dimensioned smaller than lower disc 26 and the sealing disc 24 such that it fits within the body 12 and does not adversely affect the sealing between the outlet end 40 of the body and the sealing disc 24. The sealing disc 24 is dimensioned such that in the seated position it creates an active seal between the body 12 and the lower disc 26 to create an effective barrier against odour and rodent ingress. The sealing disc 24 may be made of rubber.

In the illustrated example, the lower disc 26 comprises a recessed section 50 at the outer edge. The size of the lower disc 26 is such that the recessed section 50 is aligned with the face 52 of the outlet end 40 of the body 12. In the example illustrated in figure 1, the seal assembly 14 is pulled up towards the outlet end 40 of the body 12 such that the body 12 contacts with the spring and pushes it into the recess 50 to create an effective seal between the outlet end 40 and the seal assembly 14.

In the illustrated example, the upper disc 22 is tapered and includes a stepped section 54 at the outer edge. The stepped section 54 includes a flat external/bottom surface to ensure uniform contact with the flexible disc 24 when the seal assembly 14 is assembled and the spring 32 operates to pull the discs together and towards the outlet end 40 of the body 12.

An alternative to a sealing disc 24 acting against the outlet end of the body 12 may be provided by a seal element (not illustrated) attached to the outlet end 40 of the body such that when the closure member 1 is pulled against the outlet end 40 of the body 12 a seal is created between the mating surface of the disc 26 and the seal element.

When the shower is being used the weight generated by running water will act on the upper disc 22 to push it downwards against the force of the spring 32 to allow waste water to be removed to a waste pipe (not illustrated).

When the shower is not being used the resilience of the spring 32 acts to hold the closure member 10 against the outlet end 40 of the body 12 thereby creating an effective barrier against the ingress of odours and rodents. The action of the sealing disc 24 against the outlet end 40 of the body 12 provides an additional/enhanced barrier against the ingress of odours.

In use, the shower drain fitting 10 is inserted into a drain outlet of a shower tray. To facilitate fitting the shower drain fitting 10 to a shower tray, the body 12 may include an external screw thread at its upper edge such that the fitting 10 can be attached to a suitable drain cover (not illustrated) for connection to the outlet of the shower tray.

It will be appreciated that the illustrated shower drain fitting 10 can be cleaned simply, for example by flushing water through the body 12. Moreover, cleaning can be done with or without disassembly of the drain fitting 10. It will also be appreciated that the drain fitting 10 can be accessed easily from above for cleaning and maintenance and therefore can be removed for simple disassembly, if required, for more thorough cleaning or maintenance, for example to replace the sealing disc 24 in the event it perishes or becomes damaged.

Whilst specific embodiments of the present invention have been described above, it will be appreciated that departures from the described embodiments may still fall within the scope of the present invention, as defined by the independent claim 1.

## Claims

1. A shower drain fitting (10) for insertion into a drain outlet of a shower tray, the shower drain fitting comprises:
a hollow body (12) and a closure member (14), wherein the closure member (14) comprises an internal face and an external face, the closure member (14) being movable between a seated position and an open position, wherein in the seated position the closure member (14) engages with an outlet end (40) of the body (12) such that back-flow through the body (12) is prevented and wherein in the open position contact between the closure member (14) and the outlet end (40) of the body (12) is broken to provide a one-way through-flow path through the body (12);
wherein the closure member (14) is biased to the seated position and is movable between the seated position and the open position in response to fluid flowing through the body (12) from the drain outlet side of the body (12) and is movable substantially automatically from an open position to a seated position in the absence of fluid flow from the drain outlet side of the body and in response to pressure on the external face of the closure member (14) opposite the drain outlet side; and
wherein the internal face of the closure member (14) comprises a centre (30), an edge and a sloping surface, **characterised in that** the sloping surface defines a downward slope from the centre to the edge of the internal face wherein the incline of the sloping surface is between 3 and 15 degrees.

2. A shower drain fitting as claimed in claim 1, wherein the incline of the sloping surface is between 5 and 13 degrees.

3. A shower drain fitting as claimed in claim 2, wherein the incline of the sloping surface is between 7 and 11 degrees.

4. A shower drain fitting as claimed in any preceding claim, where in the seated position the closure member and the body are in sealing contact, wherein sealing contact is provided by a seal element on one or both of the internal face of the closure member and the outlet end of the body.

5. A shower drain fitting as claimed in any preceding claim, wherein the closure member comprises a plurality of discs (22, 24, 26) and wherein a disc (24) comprises at least an edge configured to create sealing contact between the internal face of the closure member and the outlet end of the body and a disc defines the internal face (22) comprising the sloping surface.

6. A shower drain fitting as claimed in claim 5, wherein each disc (22, 24, 26) is attached to a stem (28), wherein the stem (28) upstands from the discs (22, 24, 26) and is located substantially at the centre of the discs (22, 24, 26).

7. A shower drain fitting as claimed in claim 5 or 6, wherein the closure member comprises an arrangement of a flexible disc (24) sandwiched between an internal disc (22) and an outer disc (26).

8. A shower drain fitting as claimed in claim 7, wherein the outer disc (26) and the flexible disc (24) are dimensioned to rest against the outlet end (40) of the body (12) in the seated position and the internal disc (22) is dimensioned to fit inside the body (12) in the seated position.

9. A shower drain fitting as claimed in claim 7 or 8, wherein the outer disc (26) is formed integrally with the stem (28) ; and the internal disc (22) and the flexible disc (24) each comprise a centre hole (30) such that the discs (22, 24) can be received over the stem (28) when assembling the closure member (14), wherein the internal disc (22) defines the internal face comprising the sloping surface.

10. A shower drain fitting as claimed in 9, wherein the outer disc (26) and the internal disc (22) each comprise an external face and an internal face, wherein the internal face of the outer disc (26) and the external face of the internal disc (22) are substantially flat, and between which the flexible disc (24) is received and compressed thereby providing at least an edge seal for contact with the outlet end (40) of the body (12) and optionally one or more of the following:
the outer disc (26) comprises a recessed edge (50) on the internal face; and
the internal disc (22) comprises a stepped edge (54) on the external face.

11. A shower drain fitting as claimed in any preceding claim, wherein the body (12) comprises an outer shell, a plurality of ribs (18) and an inner sleeve (16), wherein the plurality of ribs (18) is arranged to extend between the inner sleeve (16) and an inside surface (20) of the outer shell.

12. A shower drain fitting as claimed in claim 11, further comprising a resilient member (32) operable to bias the closure member (14) to a seated position.

13. A shower drain fitting as claimed in claim 12, wherein the resilient member comprises a coiled spring (32) receivable in the inner sleeve (16) and over the stem (28).

## Patentansprüche

1. Duschablaufgarnitur (10) zum Einsetzen in einen Ablauf einer Duschwanne, wobei die Duschablaufgarnitur umfasst:
einen Hohlkörper (12) und ein Verschlusselement (14), wobei das Verschlusselement (14) eine Innenfläche und eine Außenfläche umfasst, wobei das Verschlusselement (14) zwischen einer Sitzposition und einer offenen Position bewegbar ist, wobei in der Sitzposition das Verschlusselement (14) mit einem Auslassende (40) des Körpers (12) derart eingreift, dass ein Rückfluss durch den Körper (12) verhindert wird und wobei in der offenen Position Kontakt zwischen dem Verschlusselement (14) und dem Auslassende (40) des Körpers (12) unterbrochen wird, um einen Einweg-Durchflussweg durch den Körper (12) bereitzustellen;
wobei das Verschlusselement (14) in der Sitzposition vorgespannt ist und zwischen der Sitzposition und der offenen Position als Reaktion auf Fluid, das von der Ablaufauslassseite des Körpers (12) durch den Körper (12) strömt, bewegbar ist und im Wesentlichen automatisch von einer offenen Position in eine Sitzposition bei Nichtvorhandensein eines Fluidstroms von der Ablaufauslassseite des Körpers und als Reaktion auf Druck auf die Außenfläche des Verschlusselements (14) gegenüber der Ablaufauslassseite bewegbar ist; und
wobei die Innenfläche des Verschlusselements (14) eine Mitte (30), einen Rand und eine Schrägoberfläche umfasst, **dadurch gekennzeichnet, dass** die Schrägoberfläche eine nach unten gerichtete Neigung von der Mitte zum Rand der Innenfläche definiert, wobei die Neigung der Schrägoberfläche zwischen 3 und 15 Grad beträgt.

2. Duschablaufgarnitur nach Anspruch 1, wobei die Neigung der Schrägoberfläche zwischen 5 und 13 Grad beträgt.

3. Duschablaufgarnitur nach Anspruch 2, wobei die Neigung der Schrägoberfläche zwischen 7 und 11 Grad beträgt.

4. Duschablaufgarnitur nach einem vorstehenden Anspruch, wobei in der Sitzposition das Verschlusselement und der Körper in Dichtkontakt sind, wobei der Dichtkontakt durch ein Dichtelement an einer oder beiden von der Innenfläche des Verschlusselements und dem Auslassende des Körpers bereitgestellt wird.

5. Duschablaufgarnitur nach einem vorstehenden Anspruch, wobei das Verschlusselement eine Vielzahl von Scheiben (22, 24, 26) umfasst und wobei eine Scheibe (24) mindestens einen Rand umfasst, der konfiguriert ist, um einen Dichtkontakt zwischen der Innenfläche des Verschlusselements und dem Auslassende des Körpers herzustellen und eine Scheibe die Innenfläche (22) definiert, welche die Schrägoberfläche umfasst.

6. Duschablaufgarnitur nach Anspruch 5, wobei jede Scheibe (22, 24, 26) an einem Schaft (28) befestigt ist, wobei der Schaft (28) von den Scheiben (22, 24, 26) nach oben steht und sich im Wesentlichen in der Mitte der Scheiben (22, 24, 26) befindet.

7. Duschablaufgarnitur nach Anspruch 5 oder 6, wobei das Verschlusselement eine Anordnung einer flexiblen Scheibe (24) umfasst, die zwischen einer inneren Scheibe (22) und einer äußeren Scheibe (26) angeordnet ist.

8. Duschablaufgarnitur nach Anspruch 7, wobei die äußere Scheibe (26) und die flexible Scheibe (24) so bemessen sind, dass sie in der Sitzposition am Auslassende (40) des Körpers (12) anliegen und die innere Scheibe (22) so bemessen ist, dass sie in der Sitzposition in den Körper (12) passt.

9. Duschablaufgarnitur nach Anspruch 7 oder 8, wobei die äußere Scheibe (26) einstückig mit dem Schaft (28) ausgebildet ist; und die innere Scheibe (22) und die flexible Scheibe (24) jeweils ein Mittelloch (30) umfassen, so dass die Scheiben (22, 24) beim Zusammenbau des Verschlusselements (14) über dem Schaft (28) aufgenommen werden können, wobei die Innenscheibe (22) die Innenfläche definiert, welche die Schrägoberfläche umfasst.

10. Duschablaufgarnitur nach Anspruch 9, wobei die Außenscheibe (26) und die Innenscheibe (22) jeweils eine Außenfläche und eine Innenfläche umfassen, wobei die Innenfläche der Außenscheibe (26) und die Außenfläche der Innenscheibe (22) im Wesentlichen flach sind und dazwischen die flexible Scheibe (24) aufgenommen ist und zusammengedrückt wird, wodurch mindestens eine Randabdichtung für den Kontakt mit dem Auslassende (40) des Körpers (12) bereitgestellt wird und wahlweise eines oder mehrere von Folgendem:
die äußere Scheibe (26) umfasst einen ausgesparten Rand (50) an der Innenfläche; und
die innere Scheibe (22) umfasst einen abgestuften Rand (54) an der Außenseite.

11. Duschablaufgarnitur nach einem vorstehenden Anspruch, wobei der Körper (12) eine äußere Schale, eine Vielzahl von Rippen (18) und eine innere Hülse (16) umfasst, wobei die Vielzahl von Rippen (18) so angeordnet ist, dass sie sich zwischen der inneren Hülse (16) und einer Innenoberfläche (20) der Außenschale erstreckt.

12. Duschablaufgarnitur nach Anspruch 11, weiter umfassend ein elastisches Element (32), das betätigbar ist, um das Verschlusselement (14) in eine Sitzposition vorzuspannen.

13. Duschablaufgarnitur nach Anspruch 12, wobei das elastische Element eine Spulenfeder (32) umfasst, die in der inneren Hülse (16) und über dem Schaft (28) aufgenommen werden kann.

## Revendications

1. Raccord d'évacuation de douche (10) destiné à être inséré dans une sortie d'évacuation d'un receveur de douche, le raccord d'évacuation de douche comprend :
un corps creux (12) et un organe de fermeture (14), dans lequel l'organe de fermeture (14) comprend une face interne et une face externe, l'organe de fermeture (14) pouvant être déplacé entre une position logée et une position ouverte, dans lequel dans la position logée l'organe de fermeture (14) vient en prise avec une extrémité de sortie (40) du corps (12) de sorte qu'un reflux à travers le corps (12) soit empêché et dans lequel dans la position ouverte un contact entre l'organe de fermeture (14) et l'extrémité de sortie (40) du corps (12) est rompu pour fournir un trajet d'écoulement traversant unidirectionnel à travers le corps (12) ;
dans lequel l'organe de fermeture (14) est sollicité vers la position logée et peut se déplacer entre la position logée et la position ouverte en réponse à un fluide s'écoulant à travers le corps (12) depuis le côté sortie d'évacuation du corps (12) et peut se déplacer sensiblement automatiquement d'une position ouverte à une position logée en l'absence d'écoulement de fluide en provenance du côté sortie d'évacuation du corps et en réponse à une pression sur la face externe de l'organe de fermeture (14) à l'opposé du côté sortie d'évacuation ; et
dans lequel la face interne de l'organe de fermeture (14) comprend un centre (30), un bord et une surface inclinée, **caractérisé en ce que** la surface inclinée définit une pente descendante du centre au bord de la face interne dans lequel l'inclinaison de la surface inclinée est comprise entre 3 et 15 degrés.

2. Raccord d'évacuation de douche selon la revendication 1, dans lequel l'inclinaison de la surface inclinée est comprise entre 5 et 13 degrés.

3. Raccord d'évacuation de douche selon la revendication 2, dans lequel l'inclinaison de la surface inclinée est comprise entre 7 et 11 degrés.

4. Raccord d'évacuation de douche selon une quelconque revendication précédente, où dans la position logée l'organe de fermeture et le corps sont en contact d'étanchéité, dans lequel le contact d'étanchéité est fourni par un élément d'étanchéité sur l'une ou les deux de la face interne de l'organe de fermeture et de l'extrémité de sortie du corps.

5. Raccord d'évacuation de douche selon une quelconque revendication précédente, dans lequel l'organe de fermeture comprend une pluralité de disques (22, 24, 26) et dans lequel un disque (24) comprend au moins un bord configuré pour créer un contact d'étanchéité entre la face interne de l'organe de fermeture et l'extrémité de sortie du corps et un disque définit la face interne (22) comprenant la surface inclinée.

6. Raccord d'évacuation de douche selon la revendication 5, dans lequel chaque disque (22, 24, 26) est fixé à une tige (28), dans lequel la tige (28) s'étend verticalement depuis les disques (22, 24, 26) et est située sensiblement au centre des disques (22, 24, 26).

7. Raccord d'évacuation de douche selon la revendication 5 ou 6, dans lequel l'organe de fermeture comprend un agencement d'un disque flexible (24) pris en sandwich entre un disque interne (22) et un disque externe (26).

8. Raccord d'évacuation de douche selon la revendication 7, dans lequel le disque externe (26) et le disque flexible (24) sont dimensionnés pour reposer contre l'extrémité de sortie (40) du corps (12) dans la position logée et le disque interne (22) est dimensionné pour tenir à l'intérieur du corps (12) dans la position logée.

9. Raccord d'évacuation de douche selon la revendication 7 ou 8, dans lequel le disque externe (26) est formé d'un seul tenant avec la tige (28) ; et le disque interne (22) et le disque flexible (24) comprennent chacun un trou central (30) de sorte que les disques (22, 24) puissent être reçus sur la tige (28) lors de l'assemblage de l'organe de fermeture (14), dans lequel le disque interne (22) définit la face interne comprenant la surface inclinée.

10. Raccord d'évacuation de douche selon la revendication 9, dans lequel le disque externe (26) et le disque interne (22) comprennent chacun une face externe et une face interne, dans lequel la face interne du disque externe (26) et la face externe du disque interne (22) sont sensiblement plates, et entre lesquelles le disque flexible (24) est reçu et comprimé par celles-ci fournissant au moins une étanchéité périphérique pour venir en contact avec l'extrémité de sortie (40) du corps (12) et éventuellement un ou plusieurs de ce qui suit :
le disque externe (26) comprend un bord en retrait (50) sur la face interne ; et
le disque interne (22) comprend un bord crénelé (54) sur la face externe.

11. Raccord d'évacuation de douche selon une quelconque revendication précédente, dans lequel le corps (12) comprend une coque externe, une pluralité de nervures (18) et un manchon interne (16), dans lequel la pluralité de nervures (18) sont agencées pour s'étendre entre le manchon interne (16) et une surface interne (20) de la coque externe.

12. Raccord d'évacuation de douche selon la revendication 11, comprenant en outre un organe élastique (32) utilisable pour solliciter l'organe de fermeture (14) vers une position logée.

13. Raccord d'évacuation de douche selon la revendication 12, dans lequel l'organe élastique comprend un ressort hélicoïdal (32) pouvant être reçu dans le manchon interne (16) et sur la tige (28).
